# EUROPEAN PATENT APPLICATION

(11) **EP 1 040 864 A2**
(43) Date of publication of application: **04.10.2000**
(21) Application number: 00302609.3
(22) Date of filing: 29.03.2000
(51) Int. Cl.: B01D 53/64

(54) **Control of mercury in a wet scrubber**

(30) Priority: 31.03.1999 US 282483; 18.08.1999 US 375765
(71) Applicant: THE BABCOCK & WILCOX COMPANY, New Orleans, Louisiana 70112 (US); McDermott Technology, Inc., New Orleans, Louisana 70112 (US)
(72) Inventor: Redinger, Kevin E, Alliance Ohio 44601 (US); Holmes, Michael J, Alliance Ohio 44601 (US); Yurchison, Deborah A, Boardman Ohio 44512 (US)
(74) Representative: Pilch, Adam John Michael

(57) **Abstract**

Mercury in industrial gas (12) is reduced by inhibiting oxidation in the absorber reaction tank (16) of a wet scrubber (14) so that sulfites in the wet scrubber (14) are increased to enhance mercury removal from the industrial gas (12). By controlling a rate of oxidation air (26) flow supplied to a wet scrubber slurry (34) within the absorber reaction tank (16) at a reduced rate relative to that rate of oxidation air flow required to achieve nominally 100% oxidation of the wet scrubber slurry (34), the wet scrubber slurry (34) used to scrub the industrial gas (12) contains a selected non-zero sulfite concentration sufficient to achieve greater mercury removal from the industrial gas (12). The selected sulfite concentration in the wet scrubber slurry (34) is preferably greater than about 0.3 millimoles/liter.

## Description

The present invention relates in general to the field of combustion and industrial gas cleanup methods and apparatus and, in particular, to methods and apparatus for removing mercury from the industrial gas generated by combustion which is treated by a wet scrubber.

In recent years, the U.S. Department of Energy (DOE) and the U.S. Environmental Protection Agency (EPA) have supported research to measure and control the emissions of Hazardous Air Pollutants (HAPs) from coal-fired utility boilers and waste-to-energy plants. The initial results of several research projects showed that the emissions of heavy metals and volatile organic carbons (VOCs) are very low, except for mercury (Hg). Unlike the majority of the other metals, most of the mercury remains in the vapor phase and does not condense onto fly ash particles at temperatures typically used in electrostatic precipitators and fabric filters. Therefore, it cannot be collected and disposed of along with fly ash like the other metals. To complicate matters, mercury can exist in its oxidized (Hg⁺²) or elemental (Hg⁰) form and each is affected differently by subsequent downstream pollution control equipment. In a conventional wet scrubber, Hg⁺² is relatively easy to capture while capturing Hg⁰ is difficult. The relative amount of each species appears to depend on several factors such as fuel type, boiler combustion efficiency, the type of particulate collector installed, and several other factors. As for the type of particulate collector installed, it has been shown that an electrostatic precipitator (ESP), as is used in the majority of utility applications, affects the process chemistry and as a result the Hg⁺² is converted to Hg⁰ within a downstream wet scrubber, also commonly used in utility applications to reduce SO₂ emissions. The Hg is then emitted with the flue gas.

Respective aspects of the invention are set out in the claims.

The present invention is based on the postulate that small concentrations of sulfide in the flue gas aid in mercury removal.

Testing at McDermott Technology, Inc. (MTI) to evaluate mercury control in wet FGD systems indicated that there was a significant decrease in mercury control efficiency when the wet scrubber was preceded by an electrostatic precipitator (ESP) versus a fabric filter. Also, elemental mercury levels increased across the wet scrubber when an ESP was used upstream, while elemental mercury levels were approximately the same when a fabric filter was used. It was hypothesized that mercury control is enhanced by the presence of "sulfide donating" molecules such as hydrogen sulfide (H₂S) by reaction with oxidized mercury (Hg⁺²) to form mercuric sulfide (HgS). In addition, it is hypothesized that a portion of these sulfide donating species are destroyed in the ESP by the corona and ozone, and without these species for a rapid conversion, oxidized mercury will be reduced to elemental mercury by reactions. Elemental mercury is insoluble in aqueous solutions and therefore exits the wet scrubber with the flue gas. While the sulfides are available at what are typically considered low concentrations, the concentrations of mercury entering the absorber typically range between 2 and 30 µg/dscm (micrograms/dry standard cubic meter) which roughly corresponds to 0.2 to 3.3 parts per billion (ppb). Therefore, even if a species is present only in the parts per million (ppm) range, it is about three orders of magnitude higher in concentration than mercury

Additional information in support of the hypotheses includes the observation during testing by MTI that nearly all of the mercury in the wet scrubber slurry was present in the solid fraction. This supports the hypothesis that the final form of the mercury is HgS since the solubility product of HgS is 3x10⁻⁵² and therefore would precipitate out of the aqueous phase.

Accordingly, one aspect of the present invention is drawn to a method using a wet scrubber for receiving and scrubbing an industrial gas containing mercury with a wet scrubber slurry, the wet scrubber having an absorber reaction tank containing the wet scrubber slurry to which oxidation air is supplied, and in particular the improvement comprising: reducing a supply of oxidation air to the absorber reaction tank to reduce mercury content in the industrial gas exiting from the wet scrubber.

Another aspect of the present invention is drawn to an apparatus using a wet scrubber for receiving and scrubbing an industrial gas containing mercury with a wet scrubber slurry, the wet scrubber having an absorber reaction tank containing the wet scrubber slurry to which oxidation air is supplied, and in particular the improvement comprising: oxidation air reduction means connected to the absorber reaction tank for reducing a supply of oxidation air to the absorber reaction tank to reduce mercury content in the industrial gas exiting from the wet scrubber.

Yet another aspect of the present invention is drawn to a method of using a wet scrubber which receives and scrubs an industrial gas containing mercury with a wet scrubber slurry, the wet scrubber having an absorber reaction tank containing the wet scrubber slurry to which oxidation air is supplied. This method comprises: controlling a rate of oxidation air flow supplied into the wet scrubber slurry within the absorber reaction tank at a reduced rate relative to that rate of oxidation air flow required to achieve nominally 100% oxidation of the wet scrubber slurry. In this way, the wet scrubber slurry used to scrub the industrial gas contains a desired sulfite concentration sufficient to achieve greater mercury removal from the industrial gas than that obtained when the wet scrubber slurry is provided with sufficient oxidation air to achieve nominally 100% oxidation thereof.

Yet still another aspect of the present invention is drawn to a combination, with a wet scrubber which receives and scrubs an industrial gas containing mercury with a wet scrubber slurry, the wet scrubber having an absorber reaction tank containing the wet scrubber slurry, and means for providing oxidation air to the wet scrubber slurry within the absorber reaction tank, oxidation air reduction means for reducing a rate of oxidation air supplied into the wet scrubber slurry within the absorber reaction tank. The oxidation air reduction means reduces the amount of oxidation air provided into the wet scrubber slurry by an amount sufficient to achieve greater mercury removal from the industrial gas than that obtained when the wet scrubber is provided with sufficient oxidation air to achieve nominally 100% oxidation of the wet scrubber slurry.

Yet still another aspect of the present invention is drawn to a combination, with a wet scrubber which receives and scrubs an industrial gas containing mercury with a wet scrubber slurry, the wet scrubber having an absorber reaction tank containing the wet scrubber slurry to which oxidation air is supplied; means for providing a controllable rate of oxidation air flow to the wet scrubber slurry within the absorber reaction tank; and means for controlling the rate of oxidation air flow to the wet scrubber slurry within the absorber reaction tank in response to a measured sulfite concentration in the wet scrubber slurry. The controlling means is operative to control the oxidation air flow rate at a reduced rate relative to that required to achieve nominally 100% oxidation of the wet scrubber slurry to ensure that the wet scrubber slurry used to scrub the industrial gas contains a selected non-zero sulfite concentration. In this way, the combination is able to achieve greater mercury removal from the industrial gas above that obtained when the wet scrubber is provided with sufficient oxidation air to achieve nominally 100% oxidation of the wet scrubber slurry.

The invention will now be described by way of example with reference to the accompanying drawings, throughout which like parts are referred to by like references, and in which:
- Fig. 1: is a schematic illustration of a wet scrubber and surrounding systems used according to a first embodiment of the present invention;
- Fig. 2: is a schematic illustration of a wet scrubber and surrounding systems used according to a second embodiment of the present invention;
- Fig. 3: is a graph illustrating how variations in oxidation air provided to a wet scrubber affect mercury removal from flue gas treated by the wet scrubber; and
- Fig. 4: is a graph illustrating the percent of oxidation as a function of sulfite concentration, in millimoles/liter, in the wet scrubber slurry.

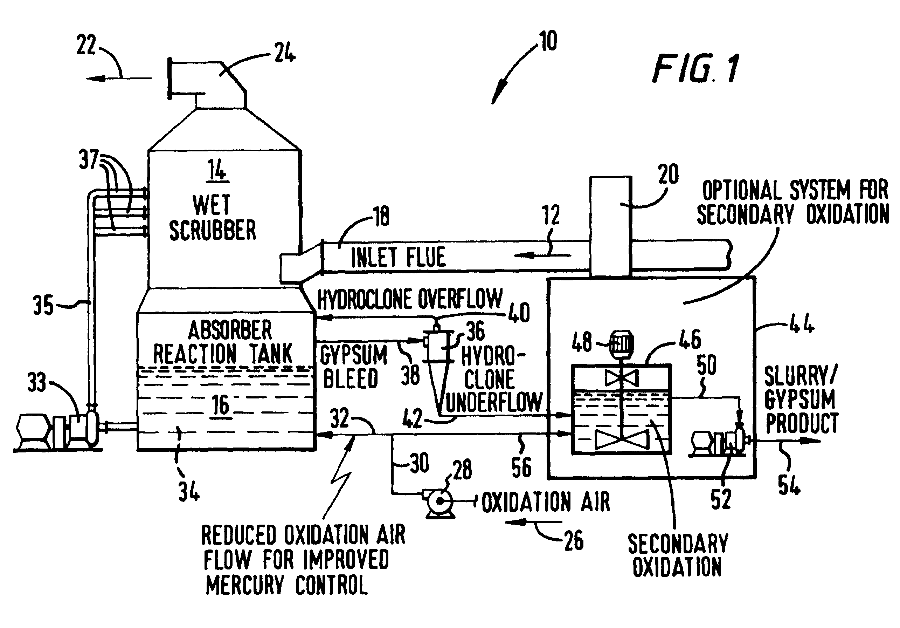

Referring to the drawings generally, wherein like reference numerals designate the same or functionally similar parts throughout the several drawings and to Fig. 1 in particular, there is shown a first embodiment of the present invention as applied to a wet scrubber installation used to treat flue gas, generally referred to as installation 10. Of course, while the method of the present invention will likely first find commercial application to the removal of mercury from the flue gases produced by utility boiler installations which combust fossil fuels, such as coal, any industrial process using a wet scrubber type of absorber module to purify such flue gases may benefit. Such processes could include incineration plants, waste to energy plants, or other industrial processes which generate gaseous products containing mercury. Thus for the sake of convenience, the terms industrial gas, flue gas, or simply gas will he used in the following discussion to refer to any gas from an industrial process and from which an objectionable component, such as mercury, is to be removed.

Additionally, for further details of various aspects of such installations 10, the reader is referred to STEAM its generation and use, 40th Ed., Stultz and Kitto, Eds., Copyright © 1992 The Babcock & Wilcox Company, particularly to Chapter 35 - Sulfur Dioxide Control, the text of which is hereby incorporated by reference as though fully set forth herein. While the aforementioned STEAM reference contains a description of one form of wet scrubber produced by The Babcock & Wilcox Company (B&W) and to which the present invention is applicable, the present invention is not limited to such B&W wet scrubber designs. Persons skilled in the art will appreciate that the principles of the present invention apply equally well to other types of wet scrubber designs, available from other manufacturers.

Generally, the present invention involves providing a supply of sulfide donating species to control mercury emissions in flue or industrial gas 12 being treated in a wet scrubber 14. According to the present invention, it is hypothesized that this can be accomplished by reducing the oxidation air supplied to an absorber reaction tank (ART) 16 forming a lower portion of the wet scrubber 14. As a result, mercury in the flue gas 12 is likely to end up as mercuric sulfide, which is relatively stable as a solid and is the form of mercury most commonly found in nature.

The flue gas 12 is typically generated by the combustion of fossil fuels and/or solid wastes in upstream (with respect to a direction of flue gas flow through the installation 10) equipment (not shown) and is conveyed to the wet scrubber 14 by means of an inlet flue 18. In many installations, the flue gas 12 is first conveyed through particulate removal means, schematically indicated at 20, to remove fly ash and other particulate from the flue gas 12 before the flue gas 12 is provided to the wet scrubber 14. As will be appreciated by those skilled in the art, particulate removal means 20 may comprise a fabric filter, electrostatic precipitator, or similar device(s) suitable for removing a desired amount of particulate from the flue gas 12. After treatment in the wet scrubber 14, scrubbed flue gas 22 exits from the wet scrubber 14 via wet scrubber outlet 24.

Oxidation air 26 provided by compressor or blower means 28 is conveyed to the ART 16 via oxidation air supply lines 30 and 32 to promote oxidation of sulfite species in a wet scrubber slurry 34 contained in the ART 16 to maximize the formation of calcium sulfate dihydrate (CaSO₄•2H₂O); i.e., gypsum.

Conventional wet scrubbers 14 are currently operated/controlled in what is referred to as a "feed-forward" control scheme; i.e., the appropriate level of SO₂ removal is simply designed, or more precisely over-designed, into the flue gas desulfurization system. For example, in wet scrubbers 14 using forced oxidation, the compressors which provide the oxidation air into the wet scrubber 14 are designed to run flat out, so that they will supply more than enough oxidation air based on design conditions. Typically, due to poor measurement reliability, SO₂ measurements are not made so as to form an input signal to a control system. In other words, "feed-back" control is typically not used.

Thus, in contrast to the conventional method of operation of such installations 10, wherein sufficient oxidation air 26 is provided into the wet scrubber slurry 34 to ensure nearly complete oxidation of the sulfite species to produce gypsum, the present invention intentionally reduces the flow rate of oxidation air 26 provided to the ART 16 to levels which will not produce nearly or essentially 100% oxidation of the sulfites into gypsum. Hereinafter, the present application will use the term "nominally 100% oxidation" to mean that degree of forced oxidation obtained under conventional wet scrubber operating procedures. Operating the wet scrubber installation 10 in this manner, with reduced oxidation air 26 flow rates, achieves less than nominally 100% oxidation of the wet scrubber slum 34. As a result non-zero concentrations or levels of sulfites are thus present in the wet scrubber slurry 34, albeit at ppm (parts per million) levels, but even this relatively low concentration of sulfite is a sufficient amount to allow the formation of mercuric sulfide, HgS, which can be collected by the wet scrubber 14.

It is recognized that in wet scrubbing forced oxidation systems which produce essentially all gypsum, some sulfites may be detectable. In other words, one can find "non-zero" concentrations of sulfite in gypsum samples obtained from systems which are considered to be operating at nominal "100%" oxidation conditions. It is thus important to recognize that. in accordance with the present invention, reducing the amount of oxidation air 26 provided to the wet scrubber will gradually lead to greater control of mercury emissions from the wet scrubber 14. Typical wet scrubber installations 10 employ more than one compressor 28 to provide the forced oxidation air 26 into the wet scrubber module 14. According to the present invention, to reduce oxidation air 26 one could turn off one of the compressors 28 thereby reducing the amount of oxidation air 26 being supplied. Alternatively, and in the unlikely situation where only one compressor 28 is provided, that compressor 28 would probably be left operating at its designed speed, but some of the oxidation air 26 would be bled off prior to its introduction into the wet scrubber module 14, thereby reducing the rate of oxidation air 26 provided into the wet scrubber module 14.

Accordingly, the present invention calls for reducing the oxidation air 26 flow rates to the ART 16, below the amounts which are typically used during operation of a forced oxidation wet scrubber installation 10, in order to reach the point at which sulfites are measurable in the wet scrubber slurry 34, preferably at levels greater than about 0.3 millimoles/liter. One way to identify this operating point or condition (i.e., slightly below 100% oxidation to gypsum) is by decreasing the flow rate of oxidation air 26 and, at the same time, monitoring the concentration of sulfites in the wet scrubber slurry 34 to determine the point where sulfites just begin to show up in the wet scrubber slurry 34 liquid phase in low, but measurable, quantities. In other words, the concentration of the sulfites in the wet scrubber slurry 34 can be used as an indicator of the extent of oxidation, and therefore the point at which sulfide-donating species are likely to become present can be determined. As will be described *infra,* another aspect of the present invention involves the use of a measurement of the sulfite concentration in the wet scrubber slurry 34 as an input parameter to a control system which could be used to control the rate of oxidation air 26 introduction into the ART 16.

During operation of the wet scrubber 14, recirculation pumps 33 pump and recirculate the wet scrubber slurry 34 from the ART 16 up through pipes 35 and into absorber spray headers 37 located in an upper portion of the wet scrubber 14. The wet scrubber slurry 34 is sprayed counter currently into the flue gas 12 where it absorbs SO₂. The wet scrubber slurry 34 falls down through various devices and drains back to the ART 16. A small fraction of the wet scrubber slurry 34 from the ART 16 and being recirculated by the pumps 33 is diverted to a dewatering system 36, such as a hydroclone, connected to the ART 16. The spent wet scrubber slurry 34 typically contains about 15% suspended solids, and the hydroclone 36 concentrates the wet scrubber slurry 34. The hydroclone 36 receives the wet scrubber slurry 34 (also referred to as gypsum bleed slurry containing gypsum and water) via gypsum bleed line 38. The underflow portion or stream from the hydroclone 36 is concentrated to about 25% solids and is removed from the system via underflow line 42. The overflow portion or stream from the hydroclone 36 contains about 4% solids and is sent back to the ART 16 via overflow line 40.

In typical wet scrubber installations 10, nominally 100% oxidation of the calcium sulfites into calcium sulfate dihydrate (CaSO₄•2H₂O) or gypsum is required to achieve "wallboard quality" gypsum. If, according to the invention, less than nominally 100% oxidation is desired to achieve desired levels of mercury control and wallboard quality gypsum is still desired, another aspect of the present invention involves provision of an optional system, generally designated 44, which provides for secondary oxidation of the hydroclone underflow stream conveyed via underflow line 42. More particularly, underflow line 42 conveys the gypsum bleed slurry 34 to a secondary oxidation tank 46 and associated mixer means 48. Secondary oxidation system 44 thus allows for optional secondary oxidation of that portion of the gypsum bleed slurry 34 from hydroclone 36 to convert the last fraction of the calcium sulfites into gypsum. Since only a small portion of the gypsum bleed slurry 34 needs to be oxidized therein, the size and cost of the equipment (the tank 46 and the mixer means 48) in optional secondary oxidation system 44 will be minimal. The same is true for line 50 and associated pump means 52 used to convey the end gypsum product stream 54 to downstream processing equipment (not shown). To the inventors' knowledge, secondary oxidation is not used by others to complete the last fraction of oxidation, or for facilitating mercury control.

Reducing the amount of oxidation air utilized in the ART 16 call be done with the existing equipment and without introducing any additives to the system. If the purity of the gypsum product stream 54 drops below system specifications for a given application, the above-identified equipment and method for secondary oxidation could be used to bring the purity of the gypsum product stream 54 back within specifications The oxidation air 26 requirements for the secondary oxidation system 44 (provided along air line 56 to tank 46) will likewise be minimal since the final oxidation is performed on only a small fraction of the original volume at a time. It should be noted that many wet scrubber installations 10 include an absorber blow down tank (not shown), and that tank could be used as the secondary oxidation system tank 46.

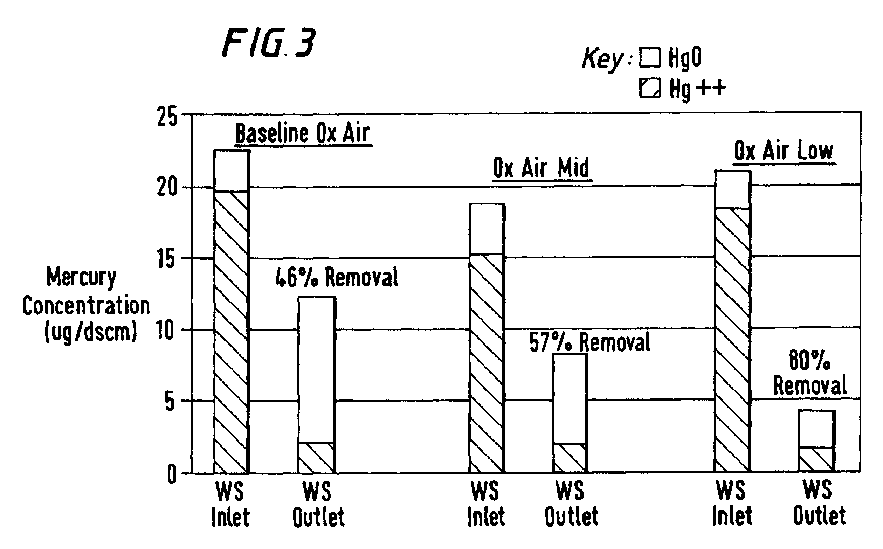

This technique was evaluated in pilot testing by MTI. For several coals, mercury measurements were performed across the wet scrubber 14 while using standard and reduced oxidation air flow rates. The results consistently showed that improved mercury capture and increases in elemental mercury across the scrubber were prevented when reduced oxidation air flow rates were tested as is shown in Fig. 3. In Fig. 3, the legends "WS Inlet" and "WS Outlet" refer to conditions at the wet scrubber 14 inlet and outlet, respectively.
- Fig. 3 shows that with conventional oxidation air 26 flow rates (the leftmost pair of bar graphs in Fig. 3 labeled "Baseline Ox Air"), 46% total mercury removal was achieved with a significant increase in the percentage of mercury exiting from the wet scrubber 14 as elemental mercury (Hg°).
- When the oxidation air 26 flow rate was slightly reduced (the middle pair of bar graphs in Fig. 3 labeled "Ox Air Mid"), 57% total mercury removal was achieved. Although an increase in the percentage of mercury exiting from the wet scrubber 14 as elemental mercury (Hg°) was still observed, the percent increase was less than the Baseline Ox Air case.
- Finally, when the oxidation air 26 flow rate was reduced just enough to observe sulfites in the wet scrubber slurry 34 (the rightmost pair of bar graphs in Fig. 3 labeled "Ox Air Low"), 80% total mercury removal was achieved, and the percentage of mercury exiting from the wet scrubber 14 as elemental mercury (Hg°) was virtually unchanged.

Therefore, these test results indicated that controlling oxidation air flow rate to a minimum value required for the formation of high purity gypsum is an effective means of enhancing mercury control in wet FGD systems. The mercury in the flue gas 12 ends up as mercuric sulfide, which is relatively stable as a solid and is the form of mercury most commonly found in nature.

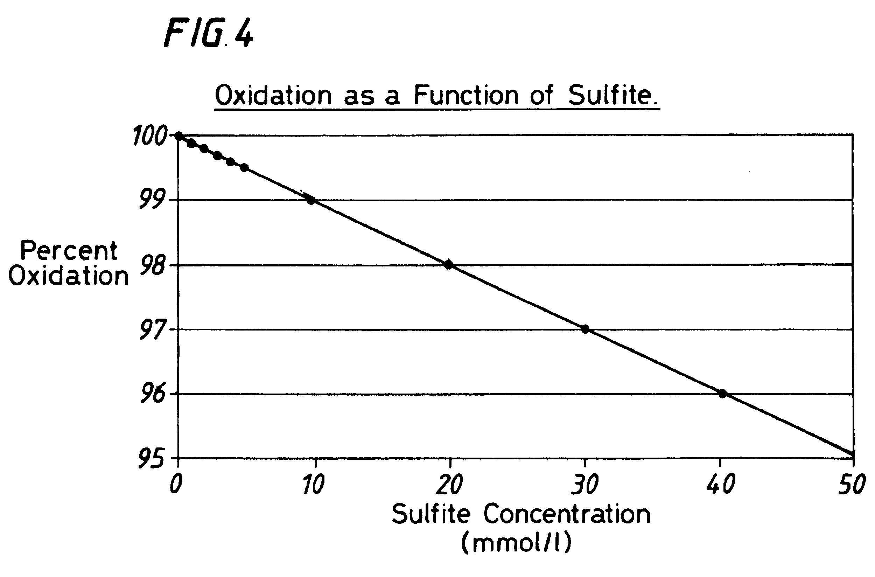

It should be noted that high conversion of calcium sulfite to calcium sulfate (gypsum) is important in order to minimize blinding in the wet scrubber 14 and to ensure high purity gypsum for cases where wallboard quality gypsum is required. However, the tests showed that significant improvements in mercury control are obtained with the presence of only small amounts of calcium sulfite. For applications where the gypsum is land filled, the purity of the gypsum is not an issue, and the oxidation air 26 flow rates can be controlled to the extent necessary to control mercury emissions, limited of course by the extent of blinding which can be tolerated in the wet scrubber 14. Blinding is a term of art which refers to deactivation of the sorbent (typically limestone) particles through encapsulation by sulfite crystals. Fig. 4 is a graph illustrating the result of calculations of the percent of oxidation as a function of sulfite concentration, in millimoles/liter, in the wet scrubber slurry. For the purposes of the present invention, to maximize mercury control the oxidation air flow would be controlled or regulated to achieve sulfite concentrations ranging from about 0.3 to about 20.0 millimoles/liter. These sulfite concentrations correspond, respectively, to a range of percent oxidation from something just less than 100% oxidation down to about 98% oxidation. It is envisioned that operation of such wet scrubber, forced oxidation systems would be operated so that the percent oxidation stays above the 98% oxidation level for two reasons. The primary reason is that oxidation levels below 98% do not provide further advantages in the control of mercury emissions. The second reason, as described earlier, is that at oxidation levels below 98% the wet scrubber systems enter a mode of operation where the phenomena of blinding is likely to become a major concern.

For cases where wallboard quality gypsum is required, the invention allows for optional secondary oxidation of the gypsum bleed slurry 34 to convert the last fraction of the calcium sulfites into gypsum.

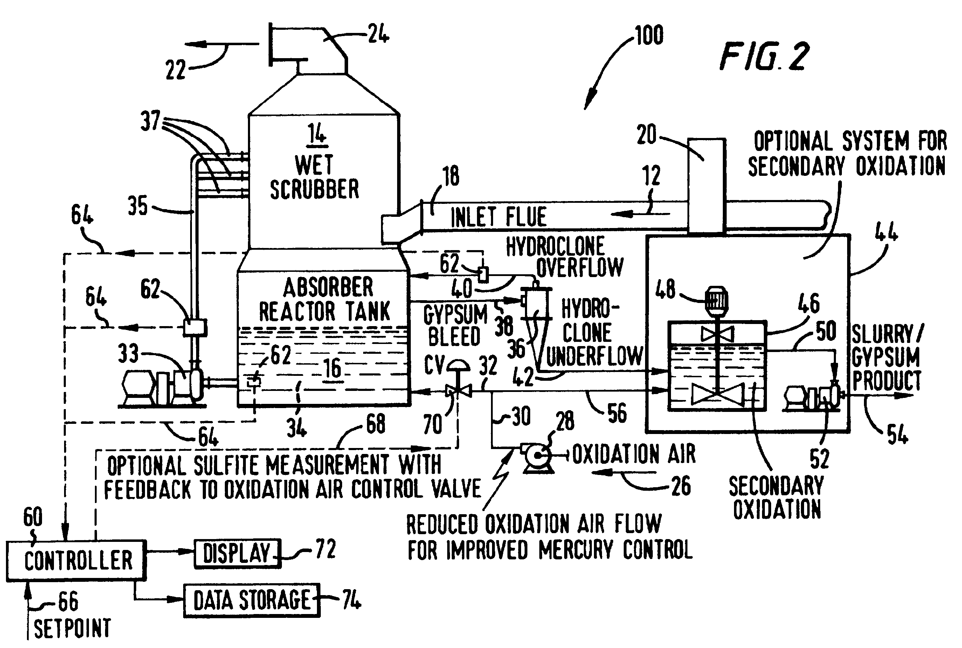

Referring to Fig. 2, there is shown another aspect of the present invention, drawn to a method and apparatus which uses a measurement of the sulfite concentration in the wet scrubber slurry 34 as a input parameter to a control system to control the rate of oxidation air 26 introduction into the ART 16. For the sake of clarity, the wet scrubber installation in Fig. 2 is designated 100. Measurements of sulfite concentration could be made on wet scrubber slurry 34 being recirculated in lines 35, on the wet scrubber slurry 34 in the ART 16 itself, or at another location, such as on the hydroclone overflow stream conveyed via overflow line 40. In this latter location, however, it should be noted that some low concentration of sulfites would be present in such a stream during normal operation and this fact would have to be taken into consideration when the system is calibrated.

More particularly, such a control system would preferably comprise controller means 60, advantageously microprocessor-based, for receiving sulfite concentration signals indicative of the sulfite concentration in the wet scrubber slurry 34. One or more sulfite concentration sensor means 62 would be provided for this purpose, and their respective signals would be conveyed via lines 64 to the controller means 60. Controller means 60 would also be provided with means for receiving sulfite concentration setpoint values 66 input from a human operator or another control device. The controller means 60 operates to compare the measured or sensed sulfite concentrations against the setpoint values 66 and, as a result of this comparison, produces a control signal outputted along line 68 which control means for controlling the rate at which the oxidation air 26 is provided to the ART 16. As illustrated in Fig. 2, one form of the means for controlling the rate of oxidation air 26 comprises an oxidation air control valve means 70 located in line 32 to control the amount of oxidation air 26 provided to the ART 16. The controller means 60 could be programmed to compare the sensed sulfite concentrations to the setpoint values 66 at desired intervals determined empirically by the variability of the sulfite concentrations with time (adaptive control), or simply at predetermined fixed intervals. Alternatively, if such a feedback type of control is determined to be unnecessary or overly complex, the controller means 60 could he programmed to merely establish a fixed control signal to the means for controlling oxidation air flow 70. Display means 72 and data storage means 74 could also be connected to the controller means 60, for providing a display of setpoint or sensed sulfite concentration values for viewing by a human operator, or recording data concerning same, respectively. Still further, the present invention contemplates that the sulfite concentration sensor means 62 could be dispensed with, and physical batch samples at the locations where such sensor means 62 would have been employed, could be taken and analyzed at a remote location such as a laboratory. In that case, a sophisticated control system would not be required and substantially fixed oxidation air 26 flow rates could be established based upon field-established setpoints.

While a specific embodiment of the invention has been shown and described in detail to illustrate the application of the principles of the invention, it will be understood that the invention may be embodied otherwise without departing from such principles. It will be particularly appreciated that the present invention can be applied to the repair, modification or replacement of existing wet scrubber installations employing forced oxidation, as well as to new wet scrubber installations. In certain embodiments of the present invention, various features of the invention may be employed without a corresponding use of other features. All such embodiments, however, fall within the scope and equivalents of the following claims.

## Claims

1. A method using a wet scrubber (14) for receiving and scrubbing an industrial gas (12) containing mercury with a wet scrubber slurry (34), the wet scrubber (14) having an absorber reaction tank (16) containing the wet scrubber slurry (34) to which oxidation air (26) is supplied, characterised by: reducing the supply of oxidation air (26) to the absorber reaction tank (16) to reduce mercury content in the industrial gas (12) exiting from the wet scrubber (14).

2. A method according to claim 1, comprising the step of reducing the supply of oxidation air (26) to the absorber reaction tank (16) to achieve a sulfite concentration in the wet scrubber slurry (34) of greater than about 0.3 millimoles/liter.

3. A method according to claim 1 or claim 2, comprising the step of reducing the supply of oxidation air (26) to the absorber reaction tank (16) to achieve a sulfite concentration in the wet scrubber slurry (34) of less than about 20.0 millimoles/liter.

4. A method according to claim 1, claim 2 or claim 3, comprising the steps of conveying the industrial gas (12) through one of a fabric filter and electrostatic precipitator (20) to remove particulates therefrom and then providing the industrial gas (12) to the wet scrubber (14).

5. A method according to any one of claims 1 to 4, wherein gypsum is formed in the absorber reaction tank (16), comprising the steps of bleeding a stream (38) of the gypsum from the absorber reaction tank (16) and subjecting the stream to secondary oxidation (46).

6. Apparatus using a wet scrubber (14) for receiving and scrubbing an industrial gas (12) containing mercury with a wet scrubber slurry (34), the wet scrubber (14) having an absorber reaction tank (16) containing the wet scrubber slurry (34) to which oxidation air (26) is supplied, characterised in that: oxidation air reduction means (28) is connected to the absorber reaction tank (16) for reducing the supply of oxidation air (26) to the absorber reaction tank (16) to reduce mercury content in the industrial gas (12) exiting from the wet scrubber (14).

7. Apparatus according to claim 6, wherein the oxidation air reduction means (28) reduces the supply of oxidation air (26) to the absorber reaction tank (16) to achieve a sulfite concentration in the wet scrubber slurry (34) of greater than about 0.3 millimoles/liter.

8. Apparatus according to claim 6 or claim 7, wherein the oxidation air reduction means (28) reduces the supply of oxidation air (26) to the absorber reaction tank (16) to achieve a sulfite concentration in the wet scrubber slurry (34) of less than about 20.0 millimoles/liter.

9. Apparatus according to claim 6, claim 7 or claim 8, comprising means for conveying the industrial gas (12) through one of a fabric filter and electrostatic precipitator (20) to remove particulates therefrom prior to providing the industrial gas (12) to the wet scrubber (14).

10. Apparatus according to any one of claims 6 to 9, wherein gypsum is formed in the absorber reaction tank (16), comprising means (38) for bleeding a stream of gypsum from the absorber reaction tank (16) and secondary oxidation means (46) for oxidizing the bled gypsum stream.

11. A method of using a wet scrubber (14) which receives and scrubs an industrial gas (12) containing mercury with a wet scrubber slurry (34), the wet scrubber (14) having an absorber reaction tank (16) containing the wet scrubber slurry (34) to which oxidation air (26) is supplied, the method comprising:
controlling a rate of oxidation air flow supplied into the wet scrubber slurry (34) within the absorber reaction tank (16) at a reduced rate relative to that rate of oxidation air flow required to achieve nominally 100% oxidation of the wet scrubber slurry (34), to ensure that the wet scrubber slurry (34) used to scrub the industrial gas (12) contains a desired sulfite concentration sufficient to achieve greater mercury removal from the industrial gas (12) than that obtained when the wet scrubber slurry (34) is provided with sufficient oxidation air (26) to achieve nominally 100% oxidation thereof.

12. A method according to claim 11, wherein the sulfite concentration in the wet scrubber slurry (34) is greater than about 0.3 millimoles/liter.

13. A method according to claim 11 or claim 12, wherein the sulfite concentration in the wet scrubber slurry (34) is less than about 20.0 millimoles/liter.

14. A method according to claim 11, claim 12 or claim 13, comprising the steps of conveying the industrial gas (12) through a fabric filter (20) to remove particulates therefrom and then providing the industrial gas (12) to the wet scrubber (14).

15. A method according to claim 11, claim 12 or claim 13, comprising the steps of conveying the industrial gas (12) through an electrostatic precipitator (20) to remove particulates therefrom and then providing the industrial gas (12) to the wet scrubber (14).

16. A method according to any one of claims 11 to 15, comprising the steps of measuring (62) the sulfite concentration in the wet scrubber slurry (34) and controlling (70) the rate of oxidation air flow into the wet scrubber slurry (34) within the absorber reaction tank (16) as a result of said measurement.

17. A method according to any one of claims 11 to 15, comprising the steps of measuring (62) the sulfite concentration in the wet scrubber slurry (34), comparing (60) the measured sulfite concentration against a predetermined setpoint value (66), and controlling (70) the rate of oxidation air flow into the wet scrubber slurry (34) within the absorber reaction tank (16) as a result of said comparison.

18. A method according to claim 17, comprising the step of producing a control signal as a result of said comparison and using the control signal to control an oxidation air control means (70) to control the amount of oxidation air (26) provided into the wet scrubber slurry (34) within the absorber reaction tank (16).

19. A method according to claim 16, claim 17 or claim 18, comprising the step of measuring sulfite concentration in the wet scrubber slurry (34) at at least one of the following locations: in a recirculation line (35) which conveys the wet scrubber slurry (34) from the absorber reaction tank (16) to an upper portion of the wet scrubber (14); within the absorber reaction tank (16); and in an overflow line (40) which returns wet scrubber slurry (34) from a hydroclone (36) to the absorber reaction tank (16).

20. A method according to any one of claims 11 to 19, comprising the step of diverting a small portion of the wet scrubber slurry (34) from the absorber reaction tank (16) to a hydroclone (36) to concentrate the wet scrubber slurry (34), conveying an underflow portion from the hydroclone (36) to a secondary oxidation system (44), providing oxidation air (26) to the secondary oxidation system (44), and oxidizing the wet scrubber slurry (34) in the secondary oxidation system (44) to convert a last fraction of sulfites in the wet scrubber slurry (34) to gypsum.

21. In combination with a wet scrubber (14) which receives and scrubs an industrial gas (12) containing mercury with a wet scrubber slurry (34), the wet scrubber (14) having an absorber reaction tank (16) containing the wet scrubber slurry (34), and means (28) for providing oxidation air (26) to the wet scrubber slurry (34) within the absorber reaction tank (16), oxidation air reduction means (70) for reducing the rate of oxidation air (26) supplied into the wet scrubber slurry (34) within the absorber reaction tank (16) by an amount sufficient to achieve greater mercury removal from the industrial gas (12) than that obtained when the wet scrubber (14) is provided with sufficient oxidation air (26) to achieve nominally 100% oxidation of the wet scrubber slurry (34).

22. Apparatus according to claim 21, wherein the oxidation air reduction means (70) reduces the rate of oxidation air (26) supplied to the wet scrubber slurry (34) within the absorber reaction tank (16) so that the selected sulfite concentration in the wet scrubber slurry (34) is greater than about 0.3 millimoles/liter.

23. Apparatus according to claim 21 or claim 22, wherein the oxidation air reduction means (70) reduces the rate of oxidation air (26) supplied to the wet scrubber slurry (34) within the absorber reaction tank (16) so that the selected sulfite concentration in the wet scrubber slurry (34) is less than about 20.0 millimoles/liter.

24. Apparatus according to claim 21, claim 22 or claim 23, comprising means (62) for measuring the sulfite concentration in the wet scrubber slurry (34) and means (60) for controlling the rate of oxidation air flow into the absorber reaction tank (16) as a result of said measurement.

25. Apparatus according to claim 24, wherein the means (62) for measuring the sulfite concentration in the wet scrubber slurry (34) is located at at least one of the following locations: in a recirculation line (35) which conveys the wet scrubber slurry (34) from the absorber reaction tank (16) to an upper portion of the wet scrubber (14); within the absorber reaction tank (16); and in an overflow line (40) which returns wet scrubber slurry (34) from a hydroclone (36) to the absorber reaction tank (16).

26. In combination, a wet scrubber (14) which receives and scrubs an industrial gas (12) containing mercury with a wet scrubber slurry (34), the wet scrubber (14) having an absorber reaction tank (16) containing the wet scrubber slurry (34) to which oxidation air (26) is supplied; means (28) for providing a controllable rate of oxidation air flow to the wet scrubber slurry (34) within the absorber reaction tank (16); and means (60) for controlling the rate of oxidation air flow to the wet scrubber slurry (34) within the absorber reaction tank (16) in response to a measured sulfite concentration in the wet scrubber slurry (34), said controlling means (60) being operative to control the oxidation air flow rate at a reduced rate relative to that required to achieve nominally 100% oxidation of the wet scrubber slurry (34) to ensure that the wet scrubber slurry (34) used to scrub the industrial gas (12) contains a selected non-zero sulfite concentration sufficient to achieve greater mercury removal from the industrial gas (12) above that obtained when the wet scrubber (14) is provided with sufficient oxidation air (26) to achieve nominally 100% oxidation of the wet scrubber slurry (34).

27. Apparatus according to claim 26, comprising:
means (62) for measuring sulfite concentration in the wet scrubber slurry (34) and producing signals indicative thereof, said measuring means (62) being located at at least one of the following locations: in a recirculation line (35) which conveys the wet scrubber slurry (34) from the absorber reaction tank (16) to an upper portion of the wet scrubber (14); within the absorber reaction tank (16); and in an overflow line (40) which returns wet scrubber slurry (34) from a hydroclone (36) to the absorber reaction tank (16).

28. Apparatus according to claim 27, comprising:
means (64) for conveying the signals indicative of measured sulfite concentration to the means (60) for controlling the rate of oxidation air flow;
means for inputting user defined setpoint values (66) into said means (60) for controlling the rate of oxidation air flow; and
means for comparing said measured sulfite concentration signals against said setpoint values (66) to produce a control signal provided to the means for controlling the rate of oxidation air flow to the wet scrubber slurry (34) within the absorber reaction tank (16).

29. Apparatus according to claim 26, claim 27 or claim 28, comprising:
means (38) for diverting a small portion of the wet scrubber slurry (34) from the absorber reaction tank (16) to a hydroclone (36) to concentrate the wet scrubber slurry (34);
means (42) for conveying an underflow portion from the hydroclone (36) to a secondary oxidation system (44); and
means (56) for providing oxidation air (26) to the secondary oxidation system (44) to oxidize the wet scrubber slurry (34) in the secondary oxidation system (44) and convert a last fraction of sulfites in the wet scrubber slurry (34) to gypsum.

30. Apparatus according to claim 29, wherein the secondary oxidation system (44) comprises a tank (46) connected to the means (42) for conveying an underflow portion from the hydroclone (36) to the secondary oxidation system (44).
